# DEMANDE DE BREVET EUROPEEN

(11) **EP 2 662 274 A1**
(43) Date de publication de la demande: **13.11.2013**
(21) Numéro de dépôt: 13166312.2
(22) Date de dépôt: 02.05.2013
(51) Int. Cl.: B62M 3/08

(54) **Pédale automatique de cycle à cage d'appui**

(30) Priorité: 10.05.2012 FR 1254276
(71) Demandeur: Look Cycle International, 58000 Nevers (FR)
(72) Inventeur: Egea, Victor, 58000 Nevers (FR); Delangue, Fabien, 58640 Varennes Vauzelles (FR)
(74) Mandataire: Petit, Maxime

(57) **Abrégé**

La pédale automatique de cycle comporte un corps de pédale (2) monté rotatif sur un axe de pédale (3) et pourvu d'un organe avant (5) d'engagement d'un organe d'accrochage fixé sous la semelle d'une chaussure de cycliste, et d'un organe arrière (6) de retenue de l'organe d'accrochage. La pédale automatique (1) comporte en outre des surfaces d'appui primaires (8) prévues sur le corps de pédale (2) et utilisées simultanément avec des surfaces d'appui auxiliaires (10) prévues sur une cage d'appui (9) disposée autour du corps de pédale (2) tout en donnant accès aux organes avant et arrière (5, 6). La cage d'appui (9) est montée amovible sur le corps de pédale (2) à l'aide de moyens de liaison (11) de manière à permettre la transformation de la pédale automatique à cage d'appui à surfaces d'appui auxiliaires en pédale automatique ordinaire sans cage d'appui et inversement.

## Description

La présente invention concerne une pédale automatique de cycle permettant la solidarisation d'une chaussure de cycliste contre une face d'accrochage prévue sur la pédale. Cette pédale automatique est pourvue d'une cage d'appui présentant des surfaces d'appui auxiliaires autour d'un corps de pédale présentant des surfaces d'appui primaires. Une telle pédale automatique est connue de la publication EP1338501 qui décrit une pédale automatique à cage d'appui et à quatre faces d'accrochage, c'est-à-dire à 90° les unes des autres.

Il doit être noté que la cage d'appui donne libre accès à des moyens de retenue prévus sur le corps de pédale de manière à permettre la fonction de la pédale en accrochage automatique. Les surfaces d'appui primaires prévues sur le corps de pédale et les surfaces d'appui secondaires prévues sur la cage d'appui sont ainsi utilisées simultanément.

La notion de "automatique" est liée au fait que la chaussure porte un organe d'accrochage ou cale de retenue sous forme d'une plaque fixée sous la semelle de la chaussure du cycliste et destinée à déclencher une fixation à mains libres en sollicitant tout simplement cette cale contre les moyens de retenue prévus sur la pédale. Ces derniers sont reliés au corps de pédale qui est monté rotatif sur un axe de pédale apte à être relié à une manivelle de pédalier. Ils comprennent en général un organe avant d'engagement de la cale et un organe arrière de retenue qui peut être élastiquement basculé entre une position de libération de la cale et une position de retenue de celle-ci contre une face d'accrochage sur le corps de pédale.

Dans la pédale automatique selon la publication EP1338501, l'organe avant d'engagement de la cale et l'organe arrière de retenue de la cale sont constitués par des arceaux réalisés en fil métallique. A l'origine, une pédale de ce genre ne comporte que des surfaces d'appui primaires relativement limitées pour la semelle sur le corps de pédale. C'est la raison pour laquelle selon le EP1338501 une cage d'appui pourvue de surfaces d'appui auxiliaires est agencée autour du corps de pédale.

Les avantages des pédales automatiques pourvues d'une cage d'appui est ainsi l'apport d'une plus grande surface d'appui grâce à la cage d'appui, ainsi qu'une possibilité pour le cycliste de ne pas être obligé de rechausser dans un passage technique lors d'une course où il aurait déchaussé involontairement.

L'invention est destinée à être appliquée à une pédale automatique à arceaux, mais également à une pédale automatique à levier formant l'organe arrière mobile de retenue. En générale, ce type de pédale automatique ne comporte qu'une seule face d'accrochage d'une cale.

Un inconvénient d'une pédale automatique à cage d'appui est qu'elle pèse inévitablement plus lourd qu'une pédale automatique sans cage d'appui. Il doit être noté que la cage d'appui selon la publication EP1338501 est montée de manière inamovible sur le corps de pédale.

Par conséquent, l'inconvénient majeur réside dans le fait que le fabricant qui souhaite proposer aussi bien des pédales automatiques sans cage d'appui que des pédales automatiques avec cage d'appui est obligé à développer deux gammes de produits distinctes, ce qui entraîne des coûts supplémentaires de production.

Cela a en outre pour conséquence pour le consommateur qu'il est obligé d'acheter deux produits différents pour avoir les avantages des pédales sans et avec cage d'appui.

Par conséquent, il y a un besoin incontestable aussi bien chez le fabricant que chez le consommateur d'avoir une pédale automatique qui combine les avantages des deux gammes de pédales automatiques, c'est-à-dire sans et avec cage d'appui.

Le but de l'invention est de proposer une pédale automatique susceptible de permettre la transformation d'une pédale automatique à cage d'appui, fonctionnant toujours en pédale automatique, en pédale automatique ordinaire sans cage d'appui et inversement pour ainsi satisfaire les besoins du fabricant et de ses clients.

L'objet de l'invention est une pédale automatique de cycle à cage d'appui, comportant un corps de pédale monté rotatif sur un axe de pédale, ledit corps de pédale étant pourvu d'un organe avant pouvant engager un organe d'accrochage fixé sous la semelle d'une chaussure de cycliste, et d'un organe arrière pouvant retenir ledit organe d'accrochage, la pédale automatique comportant en outre des surfaces d'appui primaires prévues sur le corps de pédale et destinées à être utilisées simultanément avec des surfaces d'appui auxiliaires prévues sur une cage d'appui disposée autour du corps de pédale tout en donnant accès auxdits organes avant et arrière du corps de pédale, **caractérisée en ce que** ladite cage d'appui est montée amovible sur le corps de pédale de manière à permettre la transformation de la pédale automatique à cage d'appui à surfaces d'appui auxiliaires en pédale automatique ordinaire sans cage d'appui à surfaces d'appui auxiliaires et inversement.

Selon d'autres caractéristiques de l'invention :
- la cage d'appui est en une seule pièce à simple face disposée sur l'une des faces d'accrochage de la pédale, le corps de pédale comportant des moyens de liaison aptes à coopérer avec des moyens de liaison prévus sur la cage d'appui, et l'autre face de la pédale est libre de surfaces d'appui auxiliaires ;
- la cage d'appui est formée par une première partie et une deuxième partie pourvues desdites surfaces d'appui auxiliaires et comportant des moyens de liaison permettant de les relier l'une à l'autre de manière à présenter des surfaces d'appui auxiliaires sur deux faces d'accrochage opposées de la pédale automatique ;
- ladite première partie et ladite deuxième partie de la cage d'appui sont à simple face et reliées l'une à l'autre de manière à prendre le corps de pédale en sandwich ;
- lesdites première et deuxième parties de la cage d'appui sont à double face et complémentaires l'une à l'autre en étant disposées symétriquement devant et derrière le corps de pédale, lesdites première et deuxième parties comportant respectivement un évidement latéral complémentaire définissant un logement de réception du corps de pédale lorsque lesdites première et deuxième parties de la cage d'appui sont reliées l'une à l'autre selon un plan de jonction passant par l'axe central de l'axe de pédale ; et
- lesdites première et deuxième parties de la cage d'appui sont à double face, ladite première partie de ladite cage d'appui est reliée à demeure au corps de pédale d'un côté intérieur de celui-ci, ladite deuxième partie est complémentaire à ladite première partie et reliée à celle-ci selon un plan de jonction perpendiculaire à l'axe central de l'axe de la pédale, et ladite deuxième partie comporte un trou traversant central définissant un logement de réception du corps de pédale.

Un autre objet de l'invention est une cage d'appui amovible à surfaces d'appui auxiliaires pour pédale automatique de cycle présentant les caractéristiques mentionnées ci-dessus.

Encore un autre objet de l'invention est un jeu de cages d'appui amovibles à surfaces d'appui auxiliaires pour pédale automatique de cycle comprenant plusieurs cages d'appui selon l'invention.

D'autres caractéristiques et avantages de l'invention ressortiront de la description qui va suivre de plusieurs modes de réalisation non limitatifs de l'invention, en référence aux figures annexées dans lesquelles :
- la figure 1 est une vue en perspective d'une pédale automatique susceptible de recevoir une cage d'appui selon l'invention;
- les figures 2A et 2B sont des vues dans le plan respectivement en perspective d'une cage d'appui amovible à simple face selon l'invention ;
- la figure 3 est une vue en perspective montrant une cage en place sous le corps de pédale d'une pédale automatique ;
- la figure 4 est une vue d'extrémité de l'ensemble montré à la figure 3,
- la figure 5 est une vue d'extrémité ressemblant à celle de la figure 4, avec deux parties de cage d'appui reliées l'une à l'autre autour du corps de pédale ;
- la figure 6 est une vue en perspective de l'ensemble de la figure 5 ;
- les figures 7 et 8 sont des vues de dessus respectivement en perspective montrant une première et une deuxième parties de cage d'appui à double face reliées l'une à l'autre selon un plan de jonction qui passe par l'axe central du corps de pédale ;
- les figures 9 et 10 sont des vues de dessus respectivement en perspective montrant une première et une deuxième parties de cage d'appui à double face reliées l'une à l'autre selon un plan de jonction perpendiculaire à l'axe central A-A de l'axe de pédale ; et
- la figure 11 est une vue en perspective d'une pédale automatique à levier et à simple face susceptible de recevoir une cage d'appui selon l'invention ; et
- la figure 12 est une vue dans le plan montrant la pédale automatique de la figure 11 pourvue de deux parties de cage d'appui reliées l'une à l'autre en prenant le corps de pédale en sandwich.

Dans les figures, les éléments identiques ou équivalents porteront les mêmes signes de référence.

Le fonctionnement d'une pédale automatique ne sera pas décrit ici. Pour plus de détails, voir par exemple le EP1780113 de la demanderesse. En ce qui concerne les chaussures des cyclistes, elles sont adaptées au port d'une cale de fixation qui est fixée soit sur la semelle de la chaussure lorsque la cale est de grande dimension, soit dans un évidement dans la semelle lorsque la cale est de petite dimension. Pour plus de détails, voir par exemple le EP1502515 de la demanderesse qui illustre ce dernier cas.

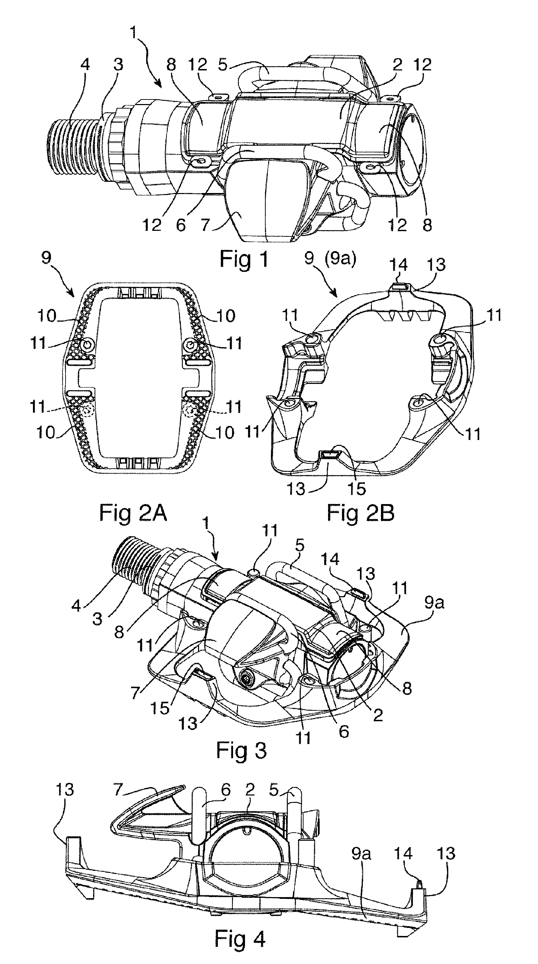

La pédale montrée à la figure 1 est une pédale automatique 1 à double face, c'est-à-dire présentant deux faces d'accrochage opposées aptes à recevoir un organe d'accrochage fixé sous la semelle d'une chaussure de cycliste (non représentés). La pédale comporte un corps de pédale 2 monté rotatif sur un axe de pédale 3 comportant à son extrémité libre un filetage 4 pour sa fixation sur une manivelle de pédalier (non représentée). Le corps de pédale 2 est pour chaque face d'accrochage pourvu d'un organe avant 5 d'engagement de l'organe d'accrochage, et d'un organe arrière mobile 6 de retenue dudit organe d'accrochage. Ces organes avant 5 et arrière 7 sont dans l'exemple illustré aux figures 1 et 3 à 11 constitués par des arceaux réalisés en fil métallique.

Un organe de guidage 7 sous forme d'une plaque inclinée est disposé immédiatement derrière l'organe arrière 6 pour empêcher la cale de venir s'engager sur l'organe arrière lors de l'accrochage de la cale. Grâce à la présence de cet organe de guidage 7, le cycliste n'a pas besoin de regarder la position exacte de la chaussure pour l'accrocher sur la pédale automatique.

La pédale automatique 1 comporte des surfaces d'appui primaires 8 prévues sur le corps de pédale 2 pour offrir un appui à la semelle de la chaussure. Il est à noter que ces surfaces d'appui primaires sont relativement limitées et que pour augmenter l'aire total des surfaces d'appui, une cage d'appui 9 associée à un corps de pédale est, comme déjà mentionné, connue du EP1338501. Cette cage d'appui 9 qui est disposée autour du corps de pédale 2 comporte des surfaces d'appui auxiliaires 10 qui sont de préférence profilées pour augmenter la friction entre la semelle de la chaussure et ces surfaces d'appui auxiliaires.

Les figures 2A et 2B montrent une cage d'appui 9 selon l'invention qui selon une caractéristique essentielle de l'invention est amovible. Selon ce premier mode de réalisation, la cage d'appui est à simple face.

La cage d'appui 9 comporte des moyens de liaison 11 qui selon une première variante sont aptes à coopérer avec des moyens de liaison 12 prévus sur le corps de pédale 2. Les moyens de liaison 11 comportent des trous de fixation et des vis de fixation devant coopérer avec des trous de fixation prévus dans les moyens de liaison 12 du corps de pédale qui présentent la forme de pattes.

Les moyens de liaison 11 et 12 permettent de fixer la cage d'appui 9 sur une seule des deux faces d'accrochage opposées de la pédale de sorte que l'autre face de la pédale est libre de surfaces d'appui auxiliaires. Le cycliste a ainsi le choix d'utiliser ou non la cage d'appui. Il peut également choisir d'enlever entièrement la cage d'appui 9 pour obtenir une pédale automatique ordinaire dépourvue de cage d'appui.

La cage amovible selon l'invention comporte selon une deuxième variante du premier mode de réalisation, une première partie 9a et une deuxième partie 9b formées par une cage d'appui simple face respective et reliées l'une à l'autre par les moyens de liaison 11. De cette manière, la pédale automatique présente des surfaces d'appui auxiliaires sur deux faces d'accrochage opposées (voir les figures 3 à 6). Le corps de pédale 2 est dans cette deuxième variante dépourvu de pattes de fixation 12 appartenant à la première variante.

Les première et deuxième parties sont avantageusement identiques. Elles comportent de préférence des moyens de liaison secondaires comportant deux saillies 13 opposées prévues au milieu de tronçons transversales respectifs des première et deuxième parties 9a, 9b de la cage d'appui. Ces saillies viennent en butée l'une contre l'autre lorsque la première et la deuxième parties 9a, 9b sont assemblées. Afin d'améliorer la liaison entre deux saillies en face, l'une est pourvue d'une languette 14 qui est insérée dans un évidement complémentaire 15 prévu dans l'autre saillie.

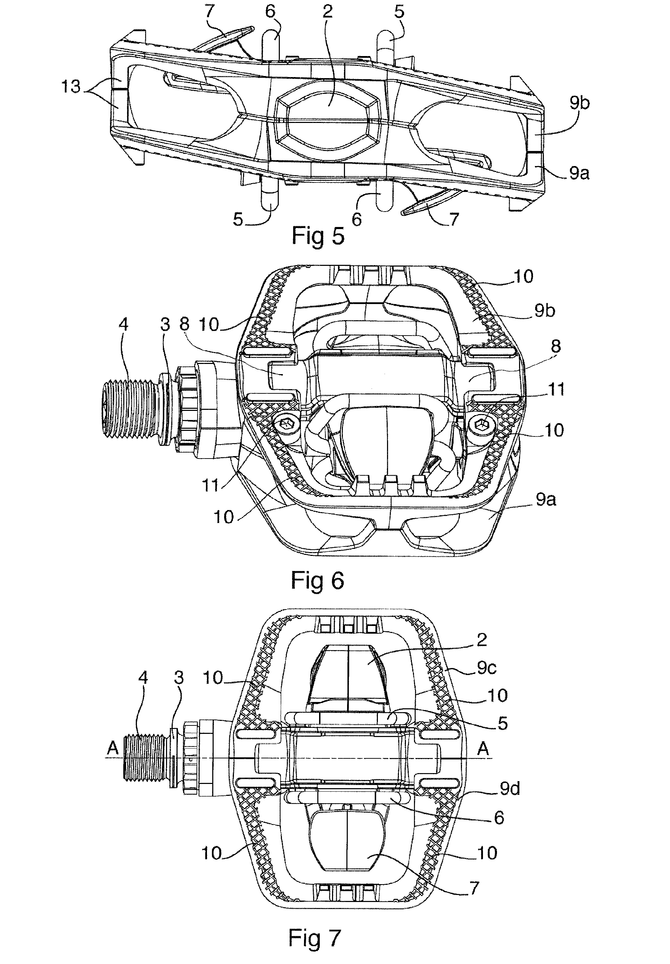

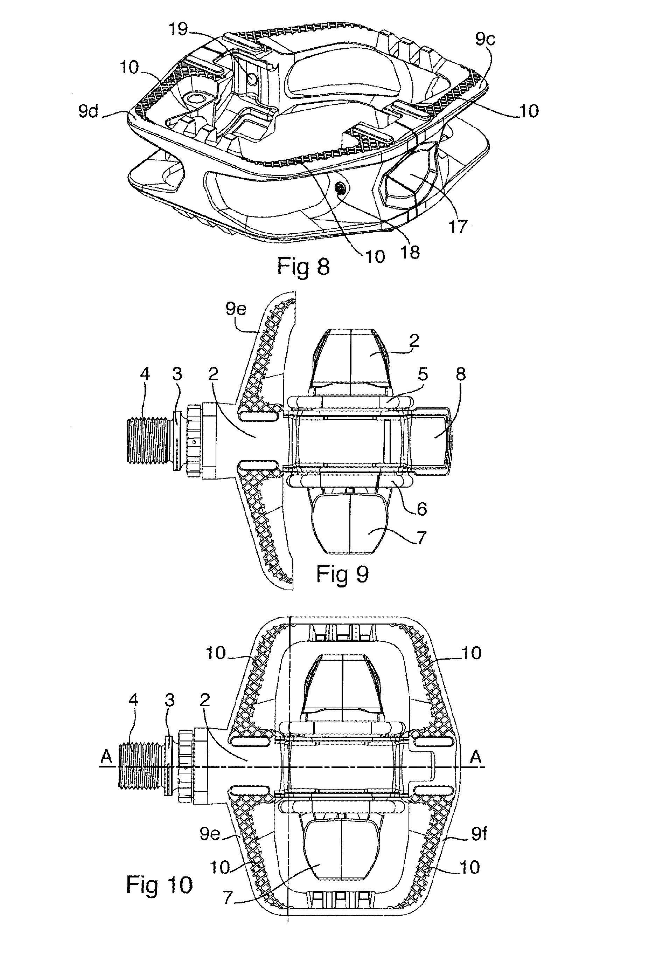

Les figures 7 et 8 montrent un deuxième mode de réalisation dans lequel des première 9c et deuxième 9d parties de la cage d'appui sont à double face et complémentaires l'une à l'autre. Contrairement au mode de réalisation illustré à la figure 5, les première 9c et deuxième 9d parties de la cage d'appui sont disposées symétriquement devant et derrière le corps de pédale. Elles comportent respectivement un évidement latéral complémentaire 17 formant ensemble un logement de réception du corps de pédale 2 lorsque lesdites première et deuxième parties 9c, 9d de la cage d'appui sont reliées l'une à l'autre selon un plan de jonction passant par l'axe central de l'axe de pédale. Les première 9c et deuxième 9d parties de la cage d'appui sont reliées l'une à l'autre à l'aide de moyens de liaison 18, ainsi qu'au corps de pédale 2 par des moyens de liaison 19.

Les figures 9 et 10 montrent un troisième mode de réalisation dans lequel des première 9e et deuxième 9f parties de la cage d'appui sont à double face. Cependant, contrairement aux modes de réalisation précédemment décrits, la première partie 9a de ladite cage d'appui est sous forme d'ailes reliées à demeure au corps de pédale 2 d'un côté intérieur de celui-ci. La deuxième partie 9f est complémentaire à la première partie 9^{e} et est reliée à celle-ci selon un plan de jonction perpendiculaire à l'axe central A-A de l'axe de pédale 3, alors que la deuxième partie 9f comporte un trou central analogue aux évidements 17 du deuxième mode de réalisation. Ce trou central forme un logement de réception du corps de pédale 2. De cette manière, la deuxième partie 9f qui constitue la plus grande partie de la cage d'appui, peut être glissée par le côté de la pédale automatique pour être jointe à la première partie 9e.

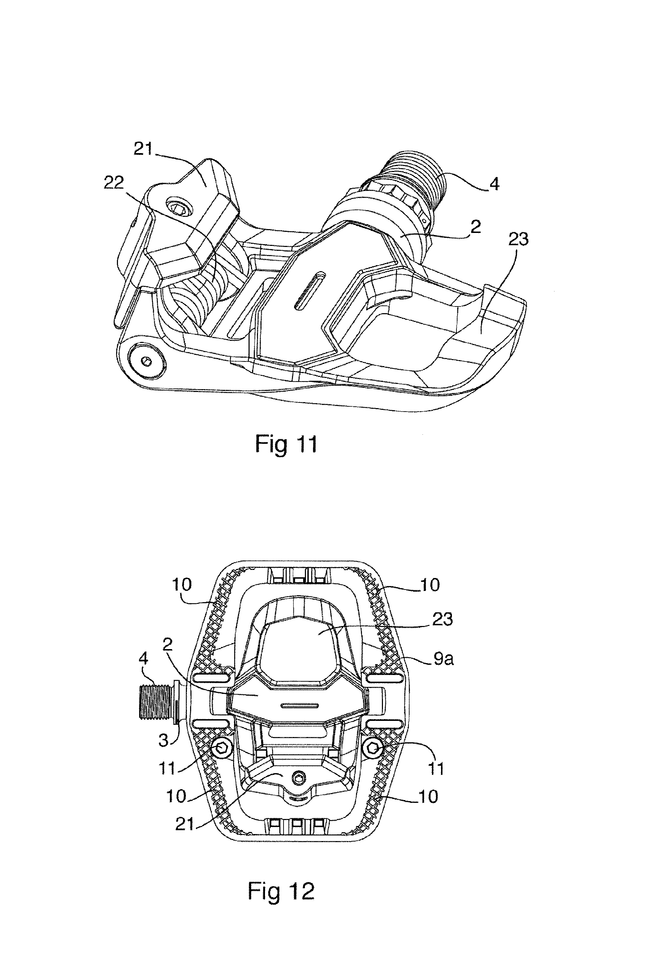

Finalement, les figures 11 et 12 montrent un autre type de pédale automatique 20 à simple face d'accrochage, dans lequel l'organe arrière mobile de retenue de la cale est constitué par un levier 21 précontraint par un ressort hélicoïdal 22 vers une position de retenue de la cale. Un organe avant fixe 23 d'engagement de la cale est prévu près de l'extrémité avant de la pédale. Cette pédale est largement connue, entre autre du EP1170203 de la demanderesse, et ne sera pas expliqué plus en détail ici.

Cette pédale automatique 20 est pourvue d'une cage d'appui 9 similaire à celle illustrée à la figure 5, c'est-à-dire une cage d'appui composée d'une première et d'une deuxième partie similaires à simple face 9a qui sont reliées l'une à l'autre à l'aide de moyens de liaison 11 de manière à prendre le corps de pédale 2 en sandwich.

Bien entendu, l'invention n'est pas limitée aux exemples illustrés et décrits, et un très grand nombre de variantes peuvent être envisagées par l'homme du métier sans pour autant sortir du cadre de l'invention.

## Revendications

1. Pédale automatique de cycle à cage d'appui, comportant un corps de pédale (2) monté rotatif sur un axe de pédale (3), ledit corps de pédale (2) étant pourvu d'un organe avant (5) pouvant engager un organe d'accrochage fixé sous la semelle d'une chaussure de cycliste, et d'un organe arrière (6) pouvant retenir ledit organe d'accrochage, la pédale automatique (1) comportant en outre des surfaces d'appui primaires (8) prévues sur le corps de pédale (2) et destinées à être utilisées simultanément avec des surfaces d'appui auxiliaires (10) prévues sur une cage d'appui (9) disposée autour du corps de pédale (2) tout en donnant accès auxdits organes avant et arrière (5, 6) du corps de pédale (2), **caractérisée en ce que** ladite cage d'appui (9) est montée amovible sur le corps de pédale (2) de manière à permettre la transformation de la pédale automatique à cage d'appui à surfaces d'appui auxiliaires en pédale automatique ordinaire sans cage d'appui à surfaces d'appui auxiliaires et inversement.

2. Pédale automatique de cycle selon la revendication 1, **caractérisée en ce que** la cage d'appui (9) est en une seule pièce à simple face disposée sur l'une des faces d'accrochage de la pédale (1), le corps de pédale (2) comportant des moyens de liaison (12) aptes à coopérer avec des moyens de liaison (11) prévus sur la cage d'appui (9), et **en ce que** l'autre face d'accrochage de la pédale est libre de surfaces d'appui auxiliaires.

3. Pédale automatique de cycle selon la revendication 1, **caractérisée en ce que** la cage d'appui (9) est formée par une première partie (9a ; 9c ; 9e) et une deuxième partie (9b ; 9d ; 9f) pourvues desdites surfaces d'appui auxiliaires (10) et comportant des moyens de liaison (11) permettant de les relier l'une à l'autre de manière à présenter des surfaces d'appui auxiliaires (10) sur deux faces d'accrochage opposées de la pédale automatique (1).

4. Pédale automatique de cycle selon la revendication 3, **caractérisée en ce que** ladite première partie (9a) et ladite deuxième partie (9b) de la cage d'appui (9) sont à simple face et reliées l'une à l'autre de manière à prendre le corps de pédale (2) en sandwich.

5. Pédale automatique de cycle selon la revendication 3, **caractérisée en ce que** ladite première partie (9c) et ladite deuxième partie (9d) de la cage d'appui (9) sont à double face et complémentaires l'une à l'autre en étant disposées symétriquement devant et derrière le corps de pédale (2), lesdites première et deuxième parties (9c, 9d) comportant respectivement un évidement complémentaire latéral (17) définissant un logement de réception du corps de pédale (2) lorsque lesdites première et deuxième parties (9c, 9d) de la cage d'appui (9) sont reliées l'une à l'autre selon un plan de jonction passant par l'axe central (A-A) de l'axe de pédale (3).

6. Pédale automatique de cycle selon la revendication 3, **caractérisée en ce que** ladite première partie (9e) et ladite deuxième partie (9f) de la cage d'appui (9) sont à double face, que ladite première partie (9e) de ladite cage d'appui (9) est reliée à demeure au corps de pédale (2) d'un côté intérieur de celui-ci, que ladite deuxième partie (9f) est complémentaire à ladite première partie (9e) et reliée à celle-ci selon un plan de jonction perpendiculaire à l'axe central (A-A) de l'axe de la pédale (3), et que ladite deuxième partie (9f) comporte un trou traversant central définissant un logement de réception du corps de pédale (2).

7. Cage d'appui amovible (9) à surfaces d'appui auxiliaires (10) pour pédale automatique de cycle (1) selon la revendication 1 en combinaison avec l'une quelconque des revendications 2 à 5.

8. Jeu de cages d'appui amovibles à surfaces d'appui auxiliaires pour pédale automatique de cycle comprenant plusieurs cages d'appui correspondant à la revendication 7.
